# EUROPEAN PATENT SPECIFICATION

(11) **EP 1 613 033 B1**
(45) Date of publication and mention of the grant of the patent: **24.03.2010**
(21) Application number: 05013963.3
(22) Date of filing: 28.06.2005
(51) Int. Cl.: H04M 1/725, G01J 1/42, G08B 21/18

(54) **Mobile terminal and wireless communication system for providing ultraviolet radiation information**
Mobiles Endgerät und drahtloses Kommunikationssystem zur Bereitstellung von UV-Strahlungsinformation
Dispositif mobile et système de communication sans fil pour la provision d'information de radiation ultraviolette

(30) Priority: 28.06.2004 KR 2004049134; 28.06.2004 KR 2004049135
(43) Date of publication of application: 04.01.2006
(73) Proprietor: LG Electronics, Inc., Seoul, 150-721 (KR)
(72) Inventor: Kim, Hee-Jeong, Dongjak-Gu Seoul (KR)
(74) Representative: Beyer, Andreas

(56) References cited:
- US-A- 6 084 510
- US-B1- 6 480 121
- PATENT ABSTRACTS OF JAPAN vol. 2003, no. 04, 2 April 2003 (2003-04-02) & JP 2002 358590 A (NIPPON TELEGR & TELEPH CORP <NTT>), 13 December 2002 (2002-12-13) & DATABASE WPI Section EI, Week 200329 Derwent Publications Ltd., London, GB; Class T01, AN 2003-293550 & JP 2002 358590 A (NIPPON TELEGRAPH & TELEPHONE CORP) 13 December 2002 (2002-12-13)

## Description

### 1. FIELD OF THE INVENTION

The present invention relates to a mobile terminal, and particularly, to a mobile terminal for providing and processing ultraviolet radiation information.

### 2. BACKGROUND OF THE INVENTION

Ultraviolet radiation (hereinafter, referred to UV) describes an electromagnetic wave within a wide wavelength-range of about 397∼10nm, and may be divided into three different types of UV-C (100∼280nm), UV-B (280∼315nm) and UV-A (316∼400nm). The UV is mostly absorbed by the earth's atmospheric layer called the ozone layer. However, with the industrial advancement, exhaustion of an ozone layer destroying substance, such as Freon gas, has increased, causing gradual destruction of the ozone layer. Thus, people are exposed to UV which destroys melanin in the human body and causes various diseases, such as skin cancer, cataract or the like. It is generally known that only UV-B is harmful, but according to recent theories, UV-C and UV-A are as harmful as UV-B.

Accordingly, as how to block or avoid the UV draws people's attention, even a portable UV value measuring device for displaying a UV index at a user's current location is released. The UV index represents the strength of UV radiation reaching the ground.

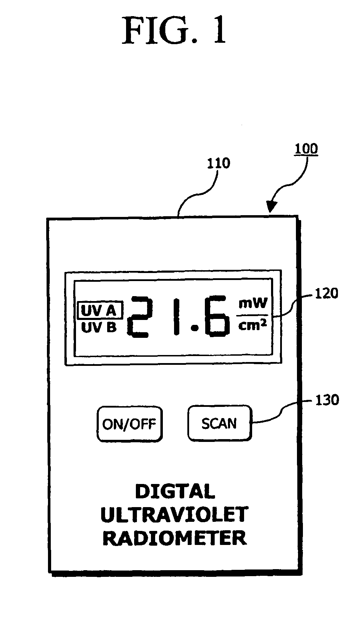

Figure 1 is a view which illustrates an exterior of the conventional portable UV value measuring device.

Referring to Figure 1, the conventional portable UV value measuring device 100 includes a liquid crystal display 120 provided in a main body 110 of a portable size. A UV sensor (not shown) provided in the main body 110 measures a UV index at a current location of the measuring device 100 when the user presses an operation button such as a scan button 130. The measured UV index is displayed on the liquid crystal display 120 as numerals so as to be easily recognizable.

A conventional UV index measuring terminal, such as the portable UV value measuring device 100, is easy to use while it displays a UV index only of the current location. Therefore, because the user cannot know the detailed UV values of neighboring regions, it is difficult for the user to assess a neighboring region that has a lower UV index.

US 6,480,121 B1 discloses a service system including a plurality of mobile and stationary units and a server. The server can provide weather forecast information to the mobile units for certain weather advisory locations and cause an audible device on a mobile unit to be activated.

JP 2002-358590 discloses to utilize a plurality of ultraviolet sensors to provide ultraviolet radiation information corresponding to the ultraviolet radiation quantity at the position of a portable telephone set.

### SUMMARY OF THE INVENTION

Therefore, an object of the present invention is to provide a mobile terminal for providing ultraviolet ray (UV) Index information, in a screen map to allow a user to easily identify UV information of surrounding regions.

Another object of the present invention is to provide a mobile terminal capable of warning the user of approaching or entry into a specific region that has a harmful ultraviolet radiation condition.

To achieve these and other advantages and in accordance with the purpose of the present invention, as embodied and broadly described herein, there is provided a mobile terminal for providing ultraviolet radiation information, the mobile terminal comprising a transmission/receiver module for wirelessly communicating with a server, wherein the mobile terminal receives from the server ultraviolet radiation information associated with a location of the mobile terminal; a display module for displaying image data associated with the atmospheric condition information received from the server; and an input module that provides a user interface to control displaying of the image data associated with the atmospheric condition information. The mobile terminal also comprises a location measuring module operatively connected to the transmission/receiver module for providing location of the mobile terminal to the server. The mobile terminal compares the UV radiation information received from the server with predetermined conditions set in the mobile terminal to activate a warning signal. The predetermined conditions comprise a user selectable distance for activating the warning signal when the mobile terminal approaches a region where the UV radiation information from the server exceeds a preset radiation level.

According to one aspect of the invention, the mobile terminal can also comprise an output module that provides at least one of audible, visible and vibratory signals.

According to another aspect of the invention, the UV radiation information received from the server is associated with information gathered from a plurality of detectors geographically located.

According to another aspect of the invention, the mobile terminal displays the UV radiation information using a radiation map comprising a plurality of cells, each cell corresponding to a predetermined area with measured radiation level. Preferably, each cell of the radiation map is color coded to show difference in radiation level. Alternatively, each cell of the radiation map is numerically coded to show difference in radiation level.

The predetermined conditions may comprise radiation warning initiation and termination times.

Preferably, the warning signal comprises at least one of audible signal, visible signal and vibratory signal.

According to another embodiment of the present invention, a wireless communication system for providing information associated with ultraviolet radiation comprises a plurality of detectors disposed at predetermined locations for measuring ultraviolet radiation in respective locations; and a server operatively connected with the plurality of detectors to generate ultraviolet radiation information and transmitting the ultraviolet radiation information to a mobile terminal as described above, wherein the ultraviolet radiation information is associated with a location of the mobile terminal.

According to another aspect of the invention, the location of the mobile terminal is received from the mobile terminal that is equipped with a global positioning system.

According to another aspect of the invention, the server provides the UV radiation information using a radiation map comprising a plurality of cells, each cell corresponding to a predetermined area with measured radiation level. Preferably, each cell of the radiation map is color coded to show difference in radiation level.

Alternatively, each cell of the radiation map is numerically coded to show difference in radiation level.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.
Figure 1 illustrates a conventional portable UV index measuring device.
Figure 2 illustrates a system for providing UV radiation information in accordance with a first embodiment of the present invention.
Figure 3 illustrates a mobile terminal for providing UV radiation information in accordance with the first embodiment of the present invention.
Figure 4 illustrates a flow chart for providing UV radiation information in accordance with the first embodiment of the present invention.
Figures 5A and 5B illustrate exemplary screens displaying UV mapping information in accordance with the first embodiment of the embodiment of Figure 4.
Figure 6 illustrates a flow chart for providing UV radiation information in a mobile terminal in accordance with a second embodiment of the present invention.
Figures 7A and 7B illustrate exemplary displays for a UV index warning setting in accordance with the second embodiment shown in Figure 6.

### DETAILED DESCRIPTION OF THE PREFERRED EMBODIMENTS

Reference will now be made in detail to the preferred embodiments of the present invention, examples of which are illustrated in the accompanying drawings.

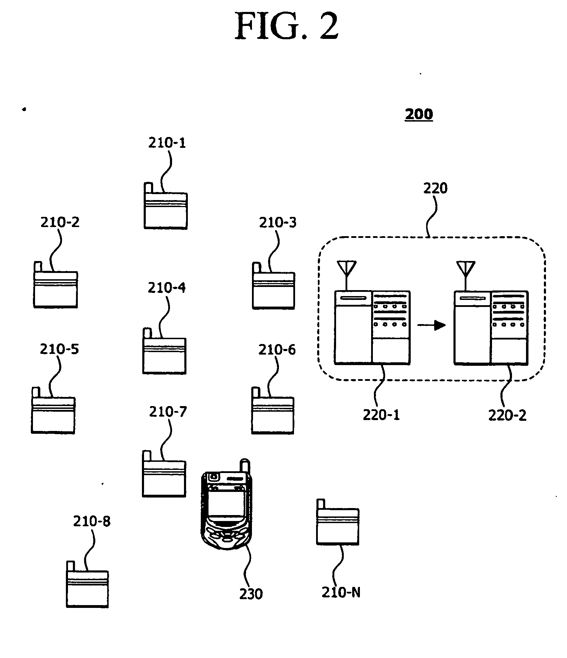

Figure 2 illustrates a system for providing of UV radiation information providing system in accordance with one embodiment of the present invention.

Referring to Figure 2, the UV radiation information providing system 200 according to a preferred embodiment of the present invention includes a plurality of remote ultraviolet ray (UV) radiation measuring devices 210-1 to 210-N for periodically or non-periodically measuring UV values at predetermined locations and sending the measured UV values to a server 220. The server 220 after receiving the UV values from the plurality of UV value measuring devices 210-1 to 210-N, divides an entire coverage region (in which UV values have been measured) into a plurality of cells of a predetermined area and generates UV mapping information that indicates a UV value for each cell. A mobile terminal 230 then receives the UV mapping information from the server 220 and displays the UV values corresponding to the grids on a lattice type map.

The server 220 may include a first server 220-1 receiving and arranging the UV values transmitted from the plurality of UV value measuring devices 210-1 to 210-N, and a second server 220-2 receiving the arranged UV values from the first server and generating the UV mapping information on the basis of the received information.

The mobile terminal 230 also sets a limit circle having a predetermined radius on the map and determines whether a UV value within the limit circle is the same as or higher than a predetermined value. If the determination result shows that the UV value within the limit circle is the same as or higher than the predetermined value, the mobile terminal 230 warns a user that he or she has entered a region where a UV value that is the same as or higher than the predetermined value is detected. The warning may be carried out by using a warning alarm, vibration, message output, or combinations of various signaling provided in the mobile terminal.

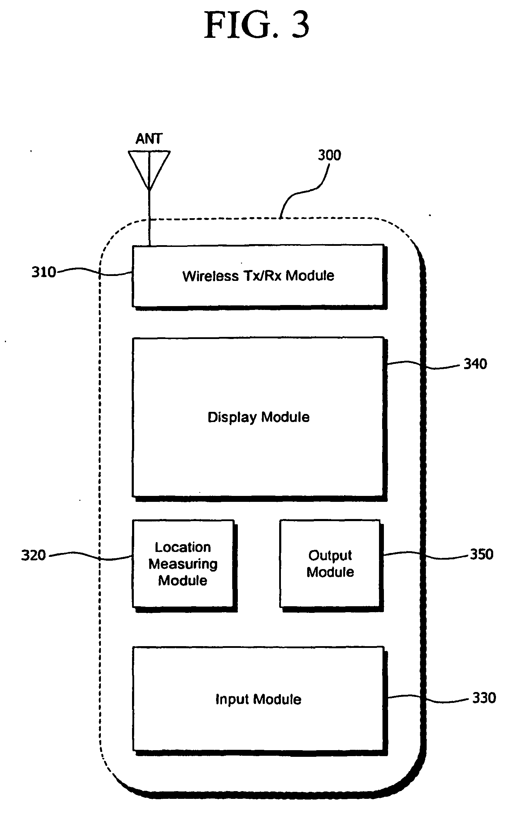

Figure 3 illustrates a mobile terminal for providing the UV radiation information in accordance with the first embodiment of the present invention.

Referring to Figure 3, the mobile terminal 300 includes a wireless receiving/transmitting module 310 that sends to a server the location information and a UV mapping information requesting signal. The receiving/transmitting module 310 receives a UV mapping information from the server.

The mobile terminal 300 includes an input module 330 that receives a condition for providing a UV index information from the user. The mobile terminal 300 also includes a display module 340, such as an LCD display. The display module 340 displays the UV mapping information, a location of the mobile terminal 300, grids dividing the map at a predetermined interval, and UV values by each level. The mobile terminal 300 further includes an output module 350 that outputs a warning to a user when the user enters a region where the corresponding UV radiation value is equal to or exceeds a predetermined value.

The mobile terminal 300 may also include a location measuring module 320 that measures a current location of the mobile terminal. The location measuring module 320 detects a current location of the mobile terminal by preferably using a global positioning system (GPS), and displays the detected location of the map (UV mapping information) of the display module 340.

Alternatively, other location measuring technologies may also be used, such as angle of arrival method and observed time difference method. In such cases, the location measuring module 320 is not needed in the mobile terminal 300 since the position of the mobile terminal may be measured by one or more servers using the above methods.

The input module 330 may be a key pad, and receives from the user a setting, such as a size of the UV mapping information, intervals between the grids dividing the map into a plurality of cells, warning conditions, and warning output methods.

For example, the map has a size of 1kmx1km as a default value with the user (the mobile terminal) is placed is preferably placed in a center. The user can adjust the size of the map to 2kmx2km or to 500mx500m through a map size setting on a menu such as 'enlargement' or 'reduction' through the input module 330. Also, when an interval between grids is set to be 50m as a default value, the user can appropriately adjust the interval to 100m or to 10m through the input module. As the map size or the interval between the grids are set, a zoom in or zoom out effect can be obtained.

As a warning distance condition, a size of a limit circle can be adjusted by setting the size of a radius to be 10m, 50m or other values, centering on the spot where the mobile terminal is placed. Also, a warning sound, vibration, message output on the display module 340 or flashing of a light emitting device, such as an LED, is selected for warning. In such a manner, a warning method suitable for the user's circumstance may be set. By setting a warning time zone, the warning is made only during a day time or within a time zone within which an UV value is high, thereby preventing unnecessary battery consumption.

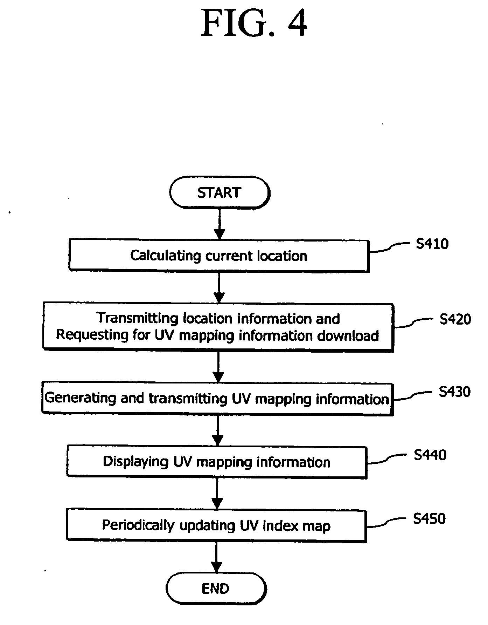

Figure 4 illustrates a flow chart for providing UV radiation information in accordance with the first embodiment of the present invention.

Referring to Figure 4, the mobile terminal calculates a current location using, for example, a GPS function when a function for displaying a UV mapping information is performed by a user (S410). When the calculation of the current location is completed, the mobile terminal sends to a server the information on the current location and requests a UV mapping information from the server (S420).

The server having received the request for the UV mapping information obtains the location information transmitted from the mobile terminal, and generates a UV mapping information centering on the corresponding location, and transmits the mapping information to the mobile terminal (S430). The mobile terminal having received the UV mapping information displays the UV mapping information on a screen as is or according to a display setting of the user (S440). Also, the mobile terminal periodically sends the updated location information to the server, and the server updates a map centering on the corresponding mobile terminal location on the basis of the updated location information of the mobile terminal. The server then transmits the updated map to the mobile terminal. As such, the UV index mapping information is updated (S450).

As described, the UV mapping information written in the server divides a region centering on the location of the mobile terminal into cells having a regular interval, and each divided cell is displayed, for example, in different colors or numerals depending on the UV index level.

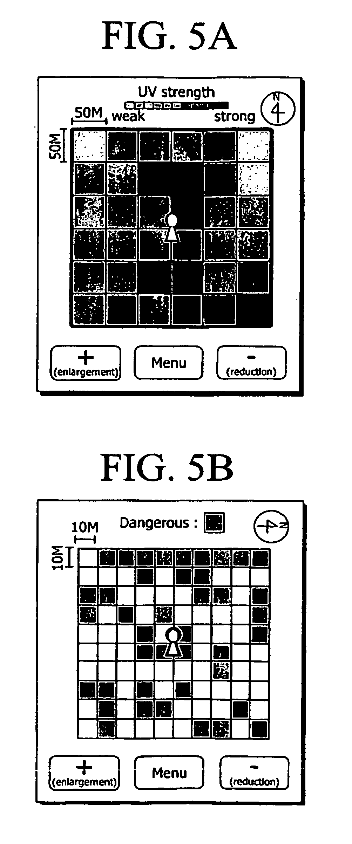

Figures 5A and 5B illustrate exemplary screens displaying UV mapping information in accordance with the first embodiment of the embodiment of Figure 4.

Figure 5A illustrates a case where each cell is 50 meters in length and width and the map size is 300mx300m. Also, the location of the mobile terminal is indicated at the center of the map, and the length and width of the cell, a bearing, and other information are displayed. Each cell is displayed in color according to the strength or level of UV radiation index. Here, as a UV index level is higher, a darker color is displayed.

Figure 5B illustrates a case where each cell is 10 meters in length and width and the map size is 100mx100m. The location of a user is indicated at the center of the map, the length and width of the cell, a bearing and other information are displayed. In this mode, only cells with a UV value not lower than a certain predetermined value is displayed in color. In other words, only a region in which a UV index indicates a dangerous (harmful) level of UV radiation is displayed in color.

Alternatively, a UV index may be displayed in each cell of the UV mapping information using numerical values in lieu of color codes. Moreover, each cell satisfying certain preset conditions, such as a safe region having a UV value lower than a certain value may be displayed in color.

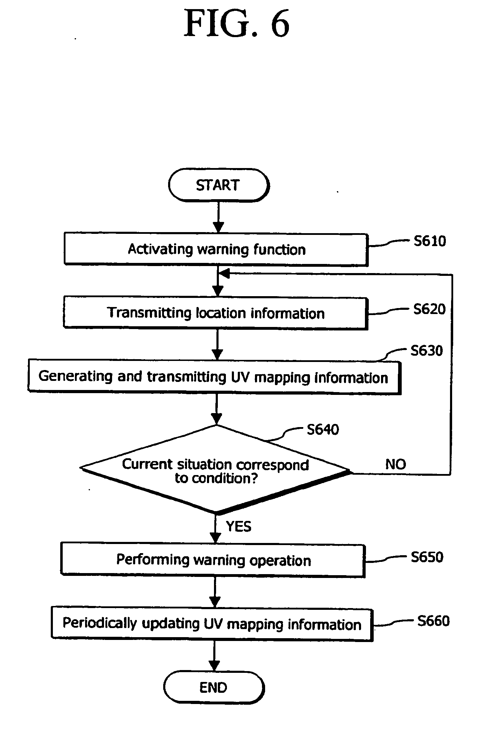

Figure 6 illustrates a flow chart for providing UV radiation information in a mobile terminal in accordance with a second embodiment of the present invention.

Referring to Figure 6, after a user sets UV radiation warning conditions, warning methods and other parameters of a mobile terminal and a warning function is activated (S610), the mobile terminal calculates a current location and transmits the calculated location information to a server (S620). The server generates a UV mapping information centering on the location of the mobile terminal and transmits the map to the mobile terminal (S630).

The mobile terminal having received the UV mapping information determines whether a current circumstance corresponds to the condition set by the user (S640). If the mobile terminal determines that the current circumstance corresponds to the set condition, namely, if the user has approached or entered a region corresponding to the warning condition set by the user, the mobile terminal warns the user of his approach to or entry into the region corresponding to the warning conditions using the warning method set by the user (S650). Also, the mobile terminal periodically transmits location information to the server and the server transmits updated UV mapping information data of a region centering on the location information. As such, the UV mapping information data is updated (S660).

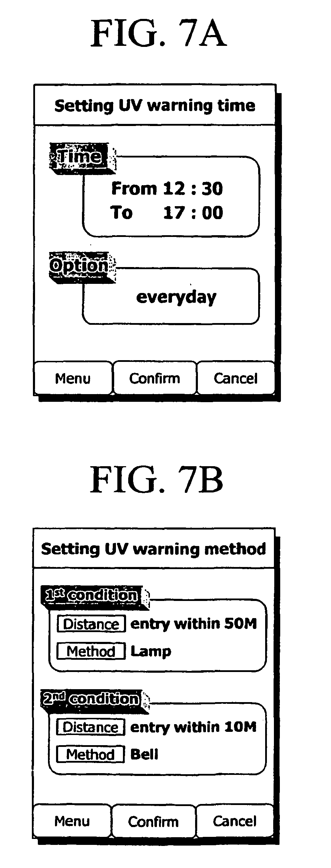

Figures 7A and 7B illustrate exemplary screens for a UV index warning setting in accordance with the second embodiment.

In Figure 7A, a screen for setting a time condition of a UV index warning setting is depicted, and the user sets a warning time period to be from 12:30 p.m. to 5 p.m., which is a time period with strong UV radiation. Accordingly, the UV index warning function is initiated at 12:30 p.m. and terminated at 5 p.m.

In Figure 7B, a screen for setting a warning distance condition and a warning method of the UV index warning setting is depicted, wherein the user sets the warning distance condition so that a first warning signal (using audible, visible or vibratory signal) is provided when the user approaches a harmful region where the UV index is not lower than a first distance value (for example, within a distance of 50m), and a different warning signal (such as bell rings) for warning when he approaches the harmful region within a shorter second distance value (for example, within a distance of 10m).

For example, the user sets the warning time zone to be 12:30 p.m. through 4 p.m., a radius of a limit circle of the first distance to be 10m and the warning method as vibration. When the mobile terminal reaches a region where a UV index is not lower than a certain value is included in the first distance (for example, 20 meters) centering on the user during the corresponding time a bell of the mobile terminal rings according to the warning method set by the user. When the mobile terminal approaches the region within a distance of 10m, the mobile terminal provides a vibration alert according to the second warning method set by the user.

Alternatively, as an option for the warning condition, a selective daily setting such as 'everyday', 'Monday through Saturday', may be set. In addition, the alert period may also be set so that the mobile terminal provides warning alerts at a predetermined interval, such as 'every five minutes', 'every ten minutes', etc.

As described, in the method for providing UV index information of the mobile terminal in accordance with the present invention, a user may be able to check detailed UV values of a region where the mobile terminal is currently located and surrounding regions. Accordingly, the present invention can provide an accurate and effective service that allows the user to avoid a region with a high UV level.

Also, in the method for providing the UV level information of the mobile terminal in accordance with the present invention, when the user approaches or enters a region where the UV index indicates a harmful level of UV radiation, the mobile terminal provides warnings to the user. Accordingly, the user can avoid the high UV radiation region without looking at a screen of the mobile terminal.

Although the embodiments herein are described with respect to monitoring and processing UV radiation information, the present invention may be utilized for monitoring and processing other atmospheric conditions. For example, by using different atmospheric detectors in Figure 2, such as ozone level detectors, temperature detectors, nitrogen detectors, nuclear radiation detectors, etc., the detected information from geographically located detectors may be transmitted to the server 220. The server 220 can then provide the processed information to one or more mobile terminals so that the user can readily detect and setup warning protocols.

It will be apparent to one skilled in the art that the embodiments of the present invention can be readily implemented using, for example, a suitably programmed digital signal processor (DSP) or other data processing device, either alone or in combination with external support logic.

The preferred embodiments may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMs, RAMs, DRAMs, SRAMs, firmware; programmable logic, etc.). Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims are therefore intended to be embraced by the appended claims.

## Claims

1. A mobile terminal (230, 300) for providing information associated with atmospheric condition, the mobile terminal (230, 300) comprising:
a location measuring module (320) operatively connected to a transmission/receiver module (310) for providing location of the mobile terminal (230, 300) to a server (220),
the transmission/receiver (310) module being adapted for wirelessly communicating with the server (220), wherein the mobile terminal (230, 300) receives from the server (220) atmospheric condition information associated with the location of the mobile terminal (230, 300);
a display module (340) for displaying image data associated with the atmospheric condition information received from the server (220); and
an input module (330) that provides a user interface to control displaying of the image data associated with the atmospheric condition information, **characterized in that**
the atmospheric condition information comprises ultraviolet (UV) radiation information,
the mobile terminal (230, 300) compares the UV radiation information received from the server (220) with predetermined conditions set in the mobile terminal (230, 300) to activate a warning signal,
wherein the predetermined conditions comprise a user selectable distance for activating the warning signal when the mobile terminal (230, 300) approaches a region where the UV radiation information from the server (220) exceeds a preset radiation level.

2. The mobile terminal (230, 300) of claim 1, further comprising an output module (350) that provides at least one of audible, visible and vibratory signals.

3. The mobile terminal (230, 300) of claim 1 or 2, wherein the UV radiation information received from the server (220) is associated with information gathered from a plurality of detectors (210-1, 210-N) geographically located.

4. The mobile terminal (230, 300) of one of the preceding claims, wherein the mobile terminal (230, 300) displays the UV radiation information using a radiation map comprising a plurality of cells, each cell corresponding to a predetermined area with measured radiation level.

5. The mobile terminal (230, 300) of claim 4, wherein each cell of the radiation map is color coded to show difference in radiation level.

6. The mobile terminal (230, 300) of claim 4, wherein each cell of the radiation map is numerically coded to show difference in radiation level.

7. The mobile terminal (230, 300) of one of the preceding claims, wherein the predetermined conditions comprise radiation warning initiation and termination times.

8. The mobile terminal (230, 300) of claim 2, wherein the warning signal comprises at least one of audible signal, visible signal and vibratory signal.

9. A wireless communication system (200) for providing ultraviolet (UV) radiation information, the wireless communication system (200) comprising:
a plurality of detectors (210-1, 210-N) disposed at predetermined locations for measuring ultraviolet radiation in respective locations; and
a server (220) operatively connected with the plurality of detectors (210-1, 210-N) to generate ultraviolet (UV) radiation information and transmitting the ultraviolet (UV) radiation information to a mobile terminal (230, 300) according to one of claims 1 to 8, wherein the ultraviolet (UV) radiation information is associated with a location of the mobile terminal (230, 300).

10. The wireless communication system (200) of claim 9, wherein the server (220) provides the UV radiation information using a radiation map comprising a plurality of cells, each cell corresponding to a predetermined area with measured radiation level.

11. A method for providing atmospheric condition information on a mobile terminal (230, 300), the method comprising:
measuring a location of the mobile terminal (230, 300) by using a location measuring module (320) on the mobile terminal (230, 300);
receiving from a server (220) atmospheric condition information associated with the location of the mobile terminal (230, 300); and
displaying image data associated with the atmospheric condition information received from the server (220), wherein the image data is controlled using a user interface on the mobile terminal (230, 300), **characterized in that**
the atmospheric condition information comprises ultraviolet (UV) radiation information and that the method further comprises the step of
comparing by the mobile terminal (230, 300) the UV radiation information received from the server (220) with predetermined conditions set in the mobile terminal (230, 300) to activate a warning signal,
wherein the predetermined conditions comprise a user selectable distance for activating the warning signal when the mobile terminal (230, 300) approaches a region where the UV radiation information from the server (220) exceeds a preset radiation level.

12. The method of claim 11, further comprising:
outputting at least one of audible, visible and vibratory signals in response to the location of the mobile terminal (230, 300) and the UV radiation information of surrounding regions.

13. The method of claim 11 or 12, wherein the UV radiation information received from the server (220) is associated with information gathered from a plurality of detectors (210-1, 210-N) geographically located.

14. The method of one of claims 11 to 13, wherein the mobile terminal (230, 300) displays the UV radiation information using a radiation map comprising a plurality of cells, each cell corresponding to a predetermined area with measured radiation level.

15. The method of claim 14, wherein each cell of the radiation map is color coded to show difference in radiation level.

16. The method of claim 14, wherein each cell of the radiation map is numerically coded to show difference in radiation level.

17. The method of one of claims 11 to 16, wherein the predetermined conditions comprise radiation warning initiation and termination time.

18. The method of one of claims 11 to 17, wherein the warning signal comprises at least one of audible signal, visible signal and vibratory signal.

## Patentansprüche

1. Mobiles Endgerät (230, 300) zur Bereitstellung von Informationen, die mit atmosphärischen Bedingungen in Zusammenhang stehen, wobei das mobile Endgerät (230, 300) umfasst:
- ein Positionsmessungsmodul (320), das betriebsfähig mit einem Sende-Empfänger-Modul (310) verbunden ist, um die Position des mobilen Endgeräts (230, 300) einem Server (220) zuzuführen,
- wobei das Sende-Empfänger-Modul (310) zur drahtlosen Kommunikation mit dem Server (220) ausgelegt ist, und wobei das mobile Endgerät (230, 300) vom Server (220) Informationen über atmosphärische Bedingungen empfängt, die mit der Position des mobilen Endgeräts (230, 300) in Zusammenhang stehen,
- ein Anzeigemodul (340) zum Anzeigen von Bilddaten, die mit den vom Server (220) empfangenen Informationen über atmosphärische Bedingungen in Zusammenhang stehen, und
- ein Eingabemodul (330), das eine Benutzerschnittstelle zur Steuerung der Anzeige der Bilddaten bereitstellt, die mit den Informationen über atmosphärische Bedingungen in Zusammenhang stehen,
**dadurch gekennzeichnet, dass**
- die Informationen über atmosphärische Bedingungen Ultraviolett- (UV-) Strahlungsinformationen umfassen,
- das mobile Endgerät (230, 300) zur Aktivierung eines Warnsignals die vom Server (220) empfangenen UV-Strahlungsinformationen mit im mobilen Endgerät (230, 300) eingestellten, vorab festgelegten Bedingungen vergleicht,
- wobei die vorab festgelegten Bedingungen einen vom Benutzer wählbaren Abstand zur Aktivierung des Warnsignals umfassen, wenn sich das mobile Endgerät (230, 300) einem Gebiet nähert, in dem die UV-Strahlungsinformationen vom Server (220) ein voreingestelltes Strahlungsniveau übersteigen.

2. Mobiles Endgerät (230, 300) nach Anspruch 1, das ferner ein Ausgabemodul (350) umfasst, das akustische, visuelle und/oder vibrierende Signale bereitstellt.

3. Mobiles Endgerät (230, 300) nach Anspruch 1 oder 2, bei dem die vom Server (220) empfangenen UV-Strahlungsinformationen mit Informationen in Zusammenhang stehen, die von mehreren an geographisch angeordneten Detektoren (210-1, 210-N) erfasst werden.

4. Mobiles Endgerät (230, 300) nach einem der vorstehenden Ansprüche, bei dem das mobile Endgerät (230, 300) die UV-Strahlungsinformationen unter Verwendung einer Strahlungskarte mit mehreren Zellen anzeigt, wobei jede Zelle einem vorab festgelegten Gebiet mit gemessenem Strahlungsniveau entspricht.

5. Mobiles Endgerät (230, 300) nach Anspruch 4, bei dem jede Zelle der Strahlungskarte farbcodiert ist, um Strahlungsniveauunterschiede zu zeigen.

6. Mobiles Endgerät (230, 300) nach Anspruch 4, bei dem jede Zelle der Strahlungskarte nummerncodiert ist, um Strahlungsniveauunterschiede zu zeigen.

7. Mobiles Endgerät (230, 300) nach einem der vorstehenden Ansprüche, bei dem die vorab festgelegten Bedingungen Strahlungswarnungsinitiierungs- und -beendigungszeiten umfassen.

8. Mobiles Endgerät (230, 300) nach Anspruch 2, bei dem das Warnsignal ein akustisches und/oder visuelles und/oder vibrierendes Signal umfasst.

9. Drahtloses Kommunikationssystem (200) zur Bereitstellung von Ultraviolett-(UV-) Strahlungsinformationen, wobei das drahtlose Kommunikationssystem (200) umfasst:
- mehrere Detektoren (210-1, 210-N), die an vorab festgelegten Positionen angeordnet sind, um die Ultraviolettstrahlung an entsprechenden Positionen zu messen, und
- einen Server (220), der betriebsfähig mit den mehreren Detektoren (210-1, 210-N) verbunden ist, um Ultraviolett- (UV-) Strahlungsinformationen zu generieren und die Ultraviolett- (UV-) Strahlungsinformationen an ein mobiles Endgerät (230, 300) nach einem der Ansprüche 1 bis 8 zu senden, wobei die Ultraviolett- (UV-) Strahlungsinformationen mit einer Position des mobilen Endgeräts (230, 300) in Zusammenhang stehen.

10. Drahtloses Kommunikationssystem (200) nach Anspruch 9, bei dem der Server (220) die UV-Strahlungsinformationen unter Verwendung einer Strahlungskarte mit mehreren Zellen bereitstellt, wobei jede Zelle einem vorab festgelegten Gebiet mit gemessenem Strahlungsniveau entspricht.

11. Verfahren zur Bereitstellung von Informationen über atmosphärische Bedingungen auf einem mobilen Endgerät (230, 300), wobei das Verfahren umfasst:
- Messen einer Position des mobilen Endgeräts (230, 300) unter Verwendung eines Positionsmessungsmoduls (320) des mobilen Endgeräts (230, 300),
- Empfangen von Informationen über atmosphärische Bedingungen, die mit der Position des mobilen Endgeräts (230, 300) in Zusammenhang stehen, von einem Server (220), und
- Anzeigen von Bilddaten, die mit den vom Server (220) empfangenen Informationen über atmosphärische Bedingungen in Zusammenhang stehen, wobei die Bilddaten unter Verwendung einer Benutzerschnittstelle des mobilen Endgeräts (230, 300) gesteuert werden,
**dadurch gekennzeichnet, dass**
- die Informationen über atmosphärische Bedingungen Ultraviolett- (UV-) Strahlungsinformationen umfassen und das Verfahren ferner den Schritt des
- Vergleichens der vom Server (220) empfangenen UV-Strahlungsinformationen mit im mobilen Endgerät (230, 300) eingestellten, vorab festgelegten Bedingungen mittels des mobilen Endgeräts (230, 300) zur Aktivierung eines Warnsignals umfasst,
- wobei die vorab festgelegten Bedingungen einen vom Benutzer wählbaren Abstand zur Aktivierung des Warnsignals umfassen, wenn sich das mobile Endgerät (230, 300) einem Gebiet nähert, in dem die UV-Strahlungsinformationen vom Server (220) ein voreingestelltes Strahlungsniveau übersteigen.

12. Verfahren nach Anspruch 11, das ferner umfasst:
- Ausgeben von akustischen und/oder visuellen und/oder vibrierenden Signalen in Antwort auf die Position des mobilen Endgeräts (230, 300) und die UV-Strahlungsinformationen umliegender Gebiete.

13. Verfahren nach Anspruch 11 oder 12, bei dem die vom Server (220) empfangenen UV-Strahlungsinformationen mit Informationen in Zusammenhang stehen, die von mehreren geographisch angeordneten Detektoren (210-1, 210-N) erfasst werden.

14. Verfahren nach einem der Ansprüche 11 bis 13, bei dem das mobile Endgerät (230, 300) die UV-Strahlungsinformationen unter Verwendung einer Strahlungskarte mit mehreren Zellen anzeigt, wobei jede Zelle einem vorab festgelegten Gebiet mit gemessenem Strahlungsniveau entspricht.

15. Verfahren nach Anspruch 14, bei dem jede Zelle der Strahlungskarte farbcodiert ist, um Strahlungsniveauunterschiede zu zeigen.

16. Verfahren nach Anspruch 14, bei dem jede Zelle der Strahlungskarte nummerncodiert ist, um Strahlungsniveauunterschiede zu zeigen.

17. Verfahren nach einem der Ansprüche 11 bis 16, bei dem die vorab festgelegten Bedingungen Strahlungswarnungsinitiierungs- und -beendigungszeiten umfassen.

18. Verfahren nach einem der Ansprüche 11 bis 17, bei dem das Warnsignal akustische, visuelle und/oder vibrierende Signale umfasst.

## Revendications

1. Terminal mobile (230, 300) pour donner une information associée à un état atmosphérique, le terminal mobile (230, 300) comprenant :
un module de mesure d'emplacement (320) opérationnellement connecté à un module d'émission/récepteur (310) pour fournir l'emplacement du terminal mobile (230, 300) à un serveur (220),
le module d'émission/récepteur (310) étant adapté pour communiquer sans fil avec le serveur (220), dans lequel le terminal mobile (230, 300) reçoit du serveur (220) une information sur l'état atmosphérique associée avec l'emplacement du terminal mobile (230, 300) ;
un module d'affichage (340) pour afficher des données d'image associées avec l'information sur l'état atmosphérique reçue du serveur (220) ; et
un module d'entrée (330) qui offre une interface utilisateur pour commander l'affichage des données d'image associées avec l'information sur l'état atmosphérique, **caractérisé en ce que**
l'information sur l'état atmosphérique comprend une information sur le rayonnement ultraviolet (UV),
le terminal mobile (230, 300) compare l'information sur le rayonnement UV reçue du serveur (220) avec des conditions prédéterminées définies dans le terminal mobile (230, 300) pour activer un signal d'avertissement,
dans lequel les conditions prédéterminées comprennent une distance sélectionnable par l'utilisateur pour activer le signal d'avertissement lorsque le terminal mobile (230, 300) approche d'une région dans laquelle l'information sur le rayonnement UV provenant du serveur (220) excède un niveau de rayonnement prédéfini.

2. Terminal mobile (230, 300) selon la revendication 1, comprenant en outre un module de sortie (350) qui délivre au moins l'un de signaux audible, visible ou vibratoire.

3. Terminal mobile (230, 300) selon la revendication 1 ou 2, dans lequel l'information sur le rayonnement UV reçue du serveur (220) est associée avec une information réunie à partir d'une pluralité de détecteurs (210-1, 210-N) géographiquement localisés.

4. Terminal mobile (230, 300) selon l'une des revendications précédentes, dans lequel le terminal mobile (230, 300) affiche l'information sur le rayonnement UV en utilisant une carte de rayonnement comprenant une pluralité de cellules, chaque cellule correspondant à une zone prédéterminée avec un niveau de rayonnement mesuré.

5. Terminal mobile (230, 300) selon la revendication 4, dans lequel chaque cellule de la carte de rayonnement a un codage couleur pour montrer une différence de niveau de rayonnement.

6. Terminal mobile (230, 300) selon la revendication 4, dans lequel chaque cellule de la carte de rayonnement est codée numériquement pour montrer une différence de niveau de rayonnement.

7. Terminal mobile (230, 300) selon l'une des revendications précédentes, dans lequel les conditions prédéterminées comprennent des instants d'initiation et de fin d'avertissement de rayonnement.

8. Terminal mobile (230, 300) selon la revendication 2, dans lequel le signal d'avertissement comprend au moins l'un d'un signal audible, d'un signal visible et d'un signal vibratoire.

9. Système de communication sans fil (200) pour délivrer une information sur un rayonnement ultraviolet (UV), le système de communication sans fil (200) comprenant :
une pluralité de détecteurs (210-1, 210-N) disposés en des emplacements prédéterminés pour mesurer le rayonnement ultraviolet dans des emplacements respectifs ; et
un serveur (220) opérationnellement connecté avec la pluralité de détecteurs (210-1, 210-N) pour générer une information sur le rayonnement ultraviolet (UV) et transmettre l'information sur le rayonnement ultraviolet (UV) à un terminal mobile (230, 300) selon l'une des revendications 1 à 8, dans lequel l'information sur le rayonnement ultraviolet (UV) est associée avec un emplacement du terminal mobile (230, 300).

10. Système de communication sans fil (200) selon la revendication 9, dans lequel le serveur (220) délivre l'information sur le rayonnement UV en utilisant une carte de rayonnement comprenant une pluralité de cellules, chaque cellule correspondant à une zone prédéterminée avec un niveau de rayonnement mesuré.

11. Procédé de fourniture d'une information sur un état atmosphérique sur un terminal mobile (230, 300), le procédé comprenant :
la mesure d'un emplacement du terminal mobile (230, 300) en utilisant un module de mesure d'emplacement (320) sur le terminal mobile (230, 300) ;
la réception à partir d'un serveur (220) d'une information sur un état atmosphérique associée avec l'emplacement du terminal mobile (230, 300) ; et
l'affichage de données d'image associées avec l'information sur l'état atmosphérique reçue du serveur (220), dans lequel les données d'image sont commandées en utilisant une interface utilisateur sur le terminal mobile (230, 300),
**caractérisé en ce que**
l'information sur l'état atmosphérique comprend une information sur le rayonnement ultraviolet (UV) et **en ce que** le procédé comprend en outre l'étape de
comparaison par le terminal mobile (230, 300) de l'information sur le rayonnement UV reçue du serveur (220) avec des conditions prédéterminées définies dans le terminal mobile (230, 300) pour activer un signal d'avertissement,
dans lequel les conditions prédéterminées comprennent une distance sélectionnable par l'utilisateur pour activer le signal d'avertissement lorsque le terminal mobile (230, 300) approche d'une région dans laquelle l'information sur le rayonnement UV provenant du serveur (220) excède un niveau de rayonnement prédéfini.

12. Procédé selon la revendication 11, comprenant en outre :
la délivrance d'au moins l'un de signaux audible, visible et vibratoire en réponse à l'emplacement du terminal mobile (230, 300) et à l'information sur le rayonnement UV des régions environnantes.

13. Procédé selon la revendication 11 ou 12, dans lequel l'information sur le rayonnement UV reçue du serveur (220) est associée avec une information réunie à partir d'une pluralité de détecteurs (210-1, 210-N) géographiquement localisés.

14. Procédé selon l'une des revendications 11 à 13, dans lequel le terminal mobile (230, 300) affiche l'information sur le rayonnement UV en utilisant une carte de rayonnement comprenant une pluralité de cellules, chaque cellule correspondant à une zone prédéterminée avec un niveau de rayonnement mesuré.

15. Procédé selon la revendication 14, dans lequel chaque cellule de la carte de rayonnement a un codage couleur pour montrer une différence de niveau de rayonnement.

16. Procédé selon la revendication 14, dans lequel chaque cellule de la carte de rayonnement est codée numériquement pour montrer une différence de niveau de rayonnement.

17. Procédé selon l'une des revendications 11 à 16, dans lequel les conditions prédéterminées comprennent un instant d'initiation et de fin d'avertissement de rayonnement.

18. Procédé selon l'une des revendications 11 à 17, dans lequel le signal d'avertissement comprend au moins l'un d'un signal audible, d'un signal visible et d'un signal vibratoire.
